(19) Europäisches Patentamt
European Patent Office
Office européen des brevets

(11) **EP 3 511 303 A1**

(12) **EUROPÄISCHE PATENTANMELDUNG**

(43) Veröffentlichungstag:
**17.07.2019 Patentblatt 2019/29**

(21) Anmeldenummer: **19159859.8**

(22) Anmeldetag: **24.03.2015**

(51) Int Cl.:
**C04B 26/14** (2006.01) **C04B 14/02** (2006.01)
**C04B 14/10** (2006.01) **C04B 14/12** (2006.01)
**C04B 14/14** (2006.01) **C04B 14/16** (2006.01)
**C04B 14/18** (2006.01) **C04B 14/20** (2006.01)
**C04B 14/22** (2006.01) **C04B 14/24** (2006.01)
**C04B 40/02** (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(62) Dokumentnummer(n) der früheren Anmeldung(en)
nach Art. 76 EPÜ:
**15160654.8 / 3 072 859**

(71) Anmelder: **DAW SE**
**64372 Ober-Ramstadt (DE)**

(72) Erfinder:
• **Koscholke, Dieter**
**31848 Bad Münder (DE)**

• **Lohmann, Thomas**
**68526 Ladenburg (DE)**

(74) Vertreter: **Metten, Karl-Heinz**
**Boehmert & Boehmert**
**Anwaltspartnerschaft mbB**
**Pettenkoferstrasse 22**
**80336 München (DE)**

Bemerkungen:
Diese Anmeldung ist am 28-02-2019 als
Teilanmeldung zu der unter INID-Code 62 erwähnten
Anmeldung eingereicht worden.

(54) **BAUKÖRPER, INSBESONDERE BAUPLATTE, SOWIE VERFAHREN ZUR HERSTELLUNG EINES BAUKÖRPERS**

(57) Die vorliegende Erfindung betrifft ein Verfahren zur Herstellung eines Baukörpers, umfassend die Schritte a) Zurverfügungstellung mindestens eines Epoxidharzes und/oder der das Epoxidharz bildenden Komponenten, und/oder Zurverfügungstellung mindestens eines Reaktivverdünners, b) Zurverfügungstellung mindestens eines Epoxidharz-Härters, c) Zurverfügungstellung mindestens eines porösen partikulären anorganischen Füllstoffmaterials, f) Vermischen von Epoxidharz und/oder Reaktivverdünner und Epoxidharz-Härter und porösem partikulären anorganischen Füllstoffmaterial in der Weise, dass das Epoxidharz und/oder der Reaktiwerdünner nicht oder nicht vollständig ausgehärtet werden, i) Einbringen der in Schritt f) erhaltenen Mischung in ein Formbehältnis, k) Beaufschlagen der in dem Formbehältnis vorliegenden Mischung mit Wärme und Pressdruck, wobei der Pressdruck derart eingestellt wird, dass mindestens ein Teil des porösen partikulären anorganischen Füllstoffmaterials in dem Formbehältnis in Bruchstücke zerkleinert wird und wobei diese Zerkleinerung stattfindet, bevor und/oder während das Epoxidharz und/oder der Reaktivverdünner durch Einwirkung des Epoxidharz-Härters und gegebenenfalls durch Einwirkung von Wärme aushärtet, und 1) Entnehmen des Baukörpers aus dem Formbehältnis. Des Weiteren betrifft die Erfindung Baukörper, umfassend oder bestehend aus mittels Epoxidharz-Härter ausgehärtetem Epoxidharz als Bindemittelmatrix und darin eingebettet einer Vielzahl an Bruchstücken eines porösen partikulären anorganischen Füllstoffmaterials insbesondere hergestellt nach dem erfindungsgemäßen Verfahren.

EP 3 511 303 A1

**Beschreibung**

Die vorliegende Erfindung betrifft einen Baukörper, insbesondere Bauplatte, beispielsweise eine Putzträgerplatte, sowie ein Verfahren zur Herstellung dieses Baukörpers.

Beim Hausbau für Wand-, Decken- und Bodenelemente zum Einsatz kommende Baukörper haben regelmäßig über eine hohe mechanische Festigkeit zu verfügen. Gleichzeitig soll ihr spezifisches Gewicht gering sein, um Transport und Verarbeitung möglichst einfach zu gestalten. Diese Anforderungen gelten insbesondere auch für sogenannte Putzträgerplatten, wie sie im Sockelbereich von Gebäudeaußenwänden, insbesondere für den Abschluss von Wärmedämmverbundsystemen, zum Einsatz kommen. Die Putzträgerplatten dienen hier zur Schaffung eines mechanisch stabilen Sockelbereichs, der zumindest teilweise mit einem Wärmedämmverbundsystem ausgestattet ist. Häufig werden solche Putzträgerplatten auch für die Verkleidung von Rolladenkästen eingesetzt. Mit Putzträgerplatten kann folglich häufig eine lückenlose Außenhaut einer Gebäudehülle gebildet werden. Diese Putzträgerplatten müssen sich dabei für die Anbringung einer Putzschicht eignen, die sich zudem in keiner Weise von der auf den benachbarten Untergründen aufgebrachten Putzschicht unterscheiden darf. Putzträgerplatten werden ebenfalls als hinterlüftete, vorgehängte Fassadenverkleidung eingesetzt, die auf einer Unterkonstruktion mit der Wand verbunden ist. Um für diesen Zweck geeignet zu sein, haben solche Putzträgerplatten nicht nur tragfähig zu sein, sondern darüber hinaus mit Hilfe von Schrauben oder Nieten an der Unterkonstruktion befestigbar zu sein.

Dem Wunsch, bei der Herstellung von Putzträgerplatten Material bzw. Kosten einzusparen, steht die Anforderung an eine etablierten Standards genügende hohe Festigkeit gegenüber. Derartige Baukörper haben zum Beispiel verschraubbar bzw. mit Hilfe von Dübeln an Wandflächen anbringbar zu sein.

Grundsätzlich kann für die Herstellung von Putzträgerplatten auf anorganische oder organische Bindemittel oder auf eine Kombination von anorganischen und organischen Bindemitteln zurückgegriffen werden. Anorganische Bindemittel werden regelmäßig eingesetzt, wenn es gilt, nichtbrennbare Putzträgerplatten zu erhalten. Derartige Putzträgerplatten erfordern im Allgemeinen große Mengen an Bindemitteln. Auch sind relativ hohe Schüttdichten und hochviskose Verarbeitungsmassen in Kauf zu nehmen. Dies bringt in der Regel hohe Verarbeitungskosten mit sich. Bei Verwendung organischer Bindemittel auf der Basis von Reaktionsharzen führt der hydrophobe Charakter dieser Reaktionsharze mitunter dazu, dass sich auf den Außenseiten eine wasserabweisende Schicht ausbildet. Um dennoch eine gute und dauerhafte Haftung mit einer angebrachten mineralischen Putzschicht zu erzielen, hat man die Oberfläche einer solchen Putzträgerplatte zuvor mit einem sogenannten Primer zu behandeln. Dies ist zeit-, arbeits- und kostenaufwändig.

Aus dem Stand der Technik sind zahlreiche Varianten von Leichtbauplatten bekannt.

Gemäß EP 290 881 A2 sollen sich Leichtbauplatten mit hoher mechanischer Festigkeit und geringer Dichte dadurch erhalten lassen, dass man 70 bis 95 Gewichtsteile an offenporigen Blähglaskugeln der Kornfraktion von 0,2 bis 20 mm und einer Rohdichte zwischen 0,2 und 0,55 g/ cm$^3$, 4 bis 30 Gewichtsteile eines geschäumten Epoxidbindemittels bestehend aus Bisphenolharz und einem Aminhärter und 0,5 bis 5 Gewichtsteile eines Polysiloxans vermischt und unter Wärmezufuhr reagieren lässt. Hierbei bildet das Bindemittel eine Schaumstruktur aus. Bei dieser Vorgehensweise wird durch die Reaktion von Polysiloxan und Amin-Härter Wasserstoff als Treibgas freigesetzt. Dies bringt erhöhte Sicherheitsanforderungen bei der Produktion mit sich.

Vielseitig einsetzbare platten- und profilförmige Bauelemente, die einfach und kostengünstig herstellbar sind, sollen sich gemäß der DE 10 2008 011 627 A1 dadurch erhalten lassen, dass man die folgenden Verfahrensschritte einhält: a) Einbringen eines Teils einer homogenen Mischung aus Blähglasgranulat und Bindemittel in eine Form, b) Ausbilden einer Schicht aus Polystyrol durch Auflegen einer Polystyrolplatte oder Aufbringen einer Schüttung aus Polystyrolkugeln auf der homogenen Mischung, c) Verteilen des restlichen Teils der homogenen Mischung auf der Polystyrolschicht und d) Verdichten durch Pressen und Aushärten zu einem platten- oder profilförmigen Bauelement bei gleichzeitiger Einwirkung von Wärme bei einer Temperatur größer oder gleich 90°C. Dies ist ein vielstufiger Prozess, bei dem unterschiedliche Technologien miteinander kombiniert werden müssen.

Aus der DE 10 2010 023 708 A1 geht ein Fertigbauteil für ein Gebäude hervor mit einer ersten Schicht aus einem Harzbindemittel und einem Blähmaterial und einer zweiten Schicht aus z.B. Leichtbeton, welche über das Bindemittel der ersten Schicht an dieser befestigt wird. Derartige Sandwichbauteile haben nur einen begrenzten Verwendungsumfang.

Die DE 10 2008 063 815 A1 betrifft offenporige Formkörper auf der Basis anorganischer Leichtgranulate mit hydrophober Oberfläche und einem organischen Bindemittel. Mit diesen offenporigen Formkörpern soll sich ein günstiges Brandschutzverhalten einstellen, auch sollen sie sich durch eine hohe Wasserdurchlässigkeit und gute Schallschutzeigenschaften bei gleichzeitig ansprechender Biegefestigkeit auszeichnen. Die für dieses Verfahren erforderlichen Ausgangsmaterialien sind nicht ohne weiteres zugänglich bzw. relativ kostenintensiv.

In der DE 10 2006 056 136 A1 werden Leichtbauformteile aus einem Verbundwerkstoff beschrieben, der auf einem Matrixmaterial ausgewählt aus der Gruppe bestehend aus Polyesterharzen, Epoxidharzen, Polymethacrylaten, Vinylesterharzen, Polyurethanen, Urethanmodifizierten Polyacrylaten und Silikonharzen und mindestens einem Leichtfüllstoffmaterial basiert. Mindestens ein Deckschichtbereich hat an der Oberfläche oder oberflächennah zwar das Matrixmaterial, nicht jedoch auch das Leichtfüllstoffmaterial aufzuweisen. Diese Leichtbauformteile, welche eine Sandwich-Struktur zeigen, sollen hochverschleißfeste, steife Strukturen mit einer ansprechenden Optik bereitstellen. Bei diesen Produkten ist mit Einbußen hinsichtlich mechanischer Festigkeit an der Oberfläche zu rechnen.

Maßhaltige Formkörper sollen gemäß der DE 20 2006 000 751 durch Verwendung von mindestens 50 Gewichtsprozent an Polyestern, Epoxiden, Polystyrol, Polyurethan und/oder Polyamid neben mineralischen Leichtzuschlagstoffen und nachwachsenden Rohstoffen erhältlich sein. Es ist häufig mit erheblichem Aufwand verbunden, nachwachsende Rohstoffe in eine Form zu bringen, die es gestattet, sie in Bauelemente einzuarbeiten.

Bauelemente, enthaltend geblähtes mineralisches Material, welche schwer entflammbar sind und ein leichtes Gewicht aufweisen, sollen sich gemäß der DE 37 15 487 dadurch erhalten lassen, dass man als Bindemittel ein flüssiges aushärtbares Kunstharz verwendet, mit dem die Oberfläche der Teilchen aus gebrähtem Material zu benetzen ist. Ferner sind hierbei Wolle, vorzugsweise in Form von Kunststofffasern, in einem Mischer mit pulverförmigem, nicht ausgehärtetem Kunstharz und einem pulverförmigen Katalysator zu vermischen und erst anschließend mit den vom noch nicht ausgehärteten Kunstharz benetzten Teilchen aus gebrähtem Material in Kontakt zu bringen.

Die aus dem Stand der Technik bekannten Leichtbauplatten sind noch stets mit Nachteilen behaftet. Es wäre daher wünschenswert, Leichtbauplatten zur Verfügung zu stellen, die frei von den geschilderten Nachteilen sind und die sich insbesondere kostengünstig herstellen lassen, ohne Einbußen bei den mechanischen Eigenschaften wie auch dem spezifischen Gewicht in Kauf nehmen zu müssen. Des Weiteren lag der Erfindung die Aufgabe zugrunde, ein Verfahren für die Herstellung von Leichtbauplatten zur Verfügung zu stellen, mit dem verlässlich und reproduzierbar hochwertige Leichtbauplatten auf kostengünstige Weise zugänglich sind. Außerdem lag der Erfindung die Aufgabe zugrunde, ein solches Verfahren für die Herstellung von Leichtbauplatten verfügbar zu machen, mit dem sich die für die jeweilige Anwendung gewünschten Eigenschaftsprofile gezielt einstellen lassen. Schließlich lag der Erfindung die Aufgabe zugrunde, Leichtbauplatten zur Verfügung zu stellen, die eine geringere Brandneigung aufweisen als die aus dem Stand der Technik bekannten Leichtbauplatten.

Demgemäß wurde ein Verfahren zur Herstellung eines Baukörpers, insbesondere einer Bauplatte, gefunden, umfassend die Schritte

a) Zurverfügungstellung mindestens eines Epoxidharzes, insbesondere Bisphenol A und/oder Bisphenol F, und/oder der das Epoxidharz bildenden Komponenten, und/oder
Zurverfügungstellung mindestens eines Reaktivverdünners,

b) Zurverfügungstellung mindestens eines Epoxidharz-Härters,

c) Zurverfügungstellung mindestens eines porösen partikulären anorganischen Füllstoffmaterials,

f) Vermischen von
Epoxidharz und/oder Reaktivverdünner und
Epoxidharz-Härter und porösem partikulären anorganischen Füllstoffmaterial in der Weise, dass das Epoxidharz und/oder der Reaktivverdünner nicht oder nicht vollständig ausgehärtet werden,

i) Einbringen der in Schritt f) erhaltenen Mischung in ein Formbehältnis,

k) Beaufschlagen der in dem Formbehältnis vorliegenden Mischung mit Wärme und Pressdruck,
wobei der Pressdruck derart eingestellt wird, dass mindestens ein Teil des porösen partikulären anorganischen Füllstoffmaterials in dem Formbehältnis in Bruchstücke zerkleinert wird und wobei diese Zerkleinerung stattfindet, bevor und/oder während das Epoxidharz und/oder der Reaktivverdünner durch Einwirkung des Epoxidharz-Härters und gegebenenfalls durch Einwirkung von Wärme aushärtet, und

l) Entnehmen des Baukörpers aus dem Formbehältnis.

Die alphabetische Buchstabenabfolge der vorliegend beschriebenen Verfahrensschritte gibt in einer bevorzugten Ausgestaltung auch die Reihenfolge der Verfahrensschritte vor; dies gilt insbesondere für die Verfahrensschritte f) bis l). Die Reihenfolge der Schritte a) bis c) bis a) bis e) kann hingegen regelmäßig frei gewählt werden.

Bevorzugt werden mit dem Verfahren als Baukörper Leichtbaukörper bzw. Leichtbauplatten, beispielsweise Putzträgerplatten, hergestellt. Selbstverständlich können mit dem Verfahren ohne weiteres auch Bauprofile erhalten werden. Je nach Anwendungsbereich ist ein hierauf abgestimmtes Formbehältnis zu verwenden. Die Baukörper können dabei als Wand-, Decken- oder Fußbodenbauteile eingesetzt werden. Üblicherweise beim Bau zum Einsatz kommende Platten verfügen über das Maß 1200 x 800 mm. Will man die Anzahl der Platten, die an einer Fassade anzubringen sind, minimieren, kann man auch auf Platten der Größe 2400 x 1200 mm zurückgreifen. Die Dicke üblicher Bauplatten, insbesondere Putzträgerplatten, beträgt im Allgemeinen 8 bis 20 mm.

Grundsätzlich kann auf dem Fachmann bekannte Epoxidharze zurückgegriffen werden, um zu den mit dem erfindungsgemäßen Verfahren erhältlichen Baukörpern zu gelangen.

Im Sinne der Erfindung soll der Begriff "Epoxidharz" ein Epoxidgruppen enthaltendes Reaktionsharz bedeuten. Ein solches Reaktionsharz stellt ein flüssiges oder verflüssigbares Harz, das mit Reaktionsmitteln wie Härter, Beschleuniger und dergleichen ohne Abspaltung flüchtiger Verbindungen durch Polyaddition härtet, dar. Bevorzugt sind Epoxidharze, die gebildet sind aus den Komponenten Bisphenol, insbesondere Bisphenol A und/oder Bisphenol F, und mindestens einer Epoxidverbindung, insbesondere Epichlorhydrin. Besonders bevorzugt wird hierbei auf ein Gemisch aus Bisphenol A und Bisphenol F zurückgegriffen. Selbstverständlich können auch weitere Bisphenole entweder einzeln oder im Gemisch, insbesondere mit Bisphenol A und/oder Bisphenol F, eingesetzt werden. Geeignete Bisphenole umfassen hierbei unter anderem Bisphenol AF, Bisphenol B, Bisphenol C und Bisphenol E. In einer besonders zweckmäßigen Ausführungsform stellt das Epoxidharz ein Diglycidylether von Bisphenol A oder von Bisphenol F oder einem Gemisch davon dar.

Sind das Epoxidharz und/oder der Reaktivverdünner mit dem Epoxidharz-Härter ausgehärtet worden, spricht man bei dem erhaltenen Produkt von einem ausgehärteten Epoxidharz.

Für geeignete Epoxidharz-Härter greift man z.B. auf Amin-Härter, insbesondere ausgewählt aus der Gruppe bestehend aus Diaminen, Triaminen, Tetraaminen, aliphatischen Polyaminen und aromatischen Polyaminen oder deren beliebigen Mischungen, z.B. Aminoethylpiperazin (AEP), 1,3-Benzoldimethanamin (MXDA) und/oder Isophorondiamin (IPDA), und/oder mindestens zurück. Unter den Amin-Härtern kommen auch Amin-Addukte, Polyamin-Addukte, Polyoxyalkylendiamin, Polyamidoamin, Mannich-Basen, hergestellt durch Kondensation von einem Phenol, einem Amin und Formaldehyd, und transaminierte Mannich-Basen in Betracht. Auch können saure Härter, insbesondere Dicarbonsäureanhydride, z.B. Hexahydrophthalsäureanhydrid, eingesetzt werden.

Zur Erhärtung flüssiger Epoxidharze und/oder Reaktivverdünner kann man demgemäß auch auf flüssige aliphatische Polyamine und/ oder Polyamidoamine zurückgreifen. Diese sind insbesondere für die Härtung bei Raumtemperatur, die sogenannte Kalthärtung geeignet. Für die sogenannte Warmhärtung, die regelmäßig bei Temperaturen oberhalb von 80°C durchgeführt wird, greift man bevorzugt auf aromatische Amine oder auf die sauren Härter, beispielsweise Anhydride der Phthalsäure zurück.

Die geschilderten Epoxidharz-Härter können in gleicher Weise zur Aushärtung von Reaktivverdünnern bzw. von Gemischen aus Epoxidharz und Reaktivverdünner eingesetzt werden. Mit den Epoxidharz-Härtern lassen sich die Verarbeitungseigenschaften des auszuhärtenden bzw. aushärtenden Epoxidharzes steuern, z.B. die Verarbeitungs- und Aushärtungszeit einstellen.

Neben dem für das Verfahren zur Verfügung gestellten Epoxidharz, oder auch alternativ, kann mindestens ein sogenannter Reaktivverdünner zu- bzw. eingesetzt werden. Mit diesem Reaktivverdünner kann die Viskosität von Epoxidharzen, beispielsweise auf Basis von Bisphenolen, verringert werden. Reaktivverdünner dienen hauptsächlich dazu, die Verarbeitungsviskosität, Topfzeit und/oder die Benetzung von Füllstoffen zu manipulieren. "Reaktivverdünner" im Sinne der Erfindung stellen demgemäß in einer Ausgestaltung des Verfahrens viskositätssenkende Stoffe dar, die bei der Härtung des Reaktionsharzes chemisch in das Harz eingebaut werden. Reaktivverdünner für Epoxidharze sind somit Epoxidgruppen enthaltende Verbindungen niedriger Viskosität. Geeignete Reaktivverdünner umfassen daher im Allgemeinen molekulare flüssige epoxyfunktionelle Verbindungen in Form von mono- und Diglycidylethern.

Bei einem Zweikomponentensystem aus Epoxidharz und Epoxidharz-Härter sollte der Reaktivverdünner vorzugsweise nicht in der Härterkomponente vorliegen, sondern vorzugsweise nur in der Harzkomponente.

Als Reaktivverdünner finden z.B. Verwendung Glycidylether von aliphatischen, alicyclisehen oder aromatischen Mono- oder insbesondere Polyalkoholen Verwendung, wie Monogylcidylether, z.B. o-Kresylglycidylether, und/oder insbesondere Glycidylether mit einer Epoxid-Funktionalität von mindestens 2, wie 1,4-Butandioldiglycidylether, Cyclohexandimethanoldiglycidylether, Hexandioldiglycidylether und/oder insbesondere Tri- oder höhere Glycidylether, z.B. Glycerintriglycidylether, Pentaerythrittetraglycidylether oder Trimethylolpropantriglycidylether, oder ferner Mischungen von zwei oder mehr dieser Reaktivverdünner, vorzugsweise Triglycidylether, besonders bevorzugt als Gemisch aus 1,4-Butandioldiglycidylether und Trimethylolpropantriglycidylether.

Geeignete Reaktivverdünner verfügen in einer zweckmäßigen Ausgestaltung über nur eine einzige Epoxidgruppe, z.B. monofunktionelle Glycidylether auf Basis eines aliphatischen und aromatischen Alkohols. Exemplarisch seien para-tert-Butylphenylglycidylether, n-Butylglycidylether, Phenylglycidylether, ortho-Kresylglycidylether, $C_{12}$-$C_{14}$-Glycidylether und 2-Ethylhexylglycidylether, genannt, wobei para-tert-Butylphenylglycidylether unter diesen bevorzugtist.

Bevorzugt unter den geeigneten Reaktivverdünnern sind di- und trifunktionelle Glycidylether sowie höherfunktionelle Glycidylether auf Basis insbesondere eines aliphatischen Alkohols oder eines aromatischen Alkohols, beispielsweise eines Alkylphenols. Exemplarisch seien Butandioldiglycidylether, Hexandioldiglycidylether, Neopentylglycoldiglycidylether, Dimethylolcyclohexandiglycidylether, Trimethylolpropanpolyglycidylether, Poly(tetramethylennoxid)diglycidylether und Polyoxyalkylendiglycidylether, z.B. Polyoxypropylenglycoldiglycidylether, genannt, wobei Hexandioldiglycidylether besonders bevorzugt ist.

Für diejenige Variante des erfindungsgemäßen Verfahrens, bei der in Schritt a) nur der Reaktivverdünner, nicht jedoch auch ein Epoxidharz zur Verfügung gestellt wird, hat sich als besonders bevorzugt erwiesen, auf di- und/oder trifunktionelle Glycidylether und/oder höherfunktionelle Glycidylether auf Basis eines aliphatischen oder aromatischen Alkohols, insbesondere auf Basis eines aliphatischen Alkohols, als Reaktivverdünner zurückzugreifen.

Optional umfasst das erfindungsgemäße Verfahren auch die Zurverfügungstellung von Alkylphenolen (Schritt d)). Soweit solche Alkylphenole zum Einsatz kommen, setzt man bevorzugt ortho- und/oder para-Alkylphenole ein. Der Alkylrest kann hierbei z.B. eine $C_1$-$C_{18}$-Einheit darstellen, z.B. mit $C_3$-$C_{18}$-Gliedern in geradkettiger Form.

Als poröse partikuläre anorganische Füllstoffmaterialien kommen z.B. geschäumte oder geblähte mineralische Materialien in Betracht. Hierbei kann das mineralische Material ausgewählt sein aus der Gruppe bestehend aus Glas, Keramik, Ton und Tonerde oder deren beliebigen Mischungen. Geeignete poröse partikuläre anorganische Füllstoffmaterialien genügen hierbei in einer Ausführungsform auch den Anforderungen an leichte Gesteinskörnungen nach DIN EN 13055-1.

Bevorzugt werden als poröse partikuläre anorganische Füllstoffmaterialien Blähton, Blähschiefer, z.B. expandiertes Glimmerschiefergranulat, Hohlglaskugeln, Hohlkeramikkugeln, Mineralblähglas, z.B. geschäumtes Blähglas und/oder Blähglasgranulate, Blähperlite, Blähglimmer, insbesondere geblähtes oder geschäumtes Vermiculit, Lavaschlacke, Tuff oder Bims oder deren beliebige Mischungen eingesetzt. Hierbei kann sowohl auf geschlossenporige als auch auf offenporige poröse partikuläre anorganische Füllstoffmaterialien zurückgegriffen werden. Bei geschlossenporigen porösen partikulären anorganischen Füllstoffmaterialien ist die Oberfläche der Füllstoffpartikel im Wesentlichen verschlossen und zeigt keine Porenöffnungen, diese liegen dann im Inneren des Partikels vor. In einer besonders geeigneten Ausgestaltung setzt sich das für das erfindungsgemäße Verfahren zur Verfügung gestellte poröse partikuläre anorganische Füllstoffmaterial aus geschlossenporigen und offenporigen Füllstoffen zusammen. Das poröse partikuläre anorganische Füllstoffmaterial weist bevorzugt eine durchschnittliche Teilchengröße im Bereich von 0,1 mm bis 8 mm, besonders bevorzugt im Bereich von 0,2 mm bis 6 mm und insbesondere im Bereich von 0,5 mm bis 4 mm, auf. Die Teilchengrößenverteilung der porösen partikulären anorganischen Füllstoffmaterialien kann dabei in einer zweckmäßigen Ausgestaltung monomodal sein.

Überraschenderweise hat sich gezeigt, dass sich sehr gute Materialeigenschaften für die mit dem erfindungsgemäßen Verfahren erhältlichen Baukörper hinsichtlich Festigkeit und Gewicht auch bei Verwendung solcher poröser partikulärer anorganischer Füllstoffmaterialien erhalten lassen, die eine enge Teilchengrößenverteilung aufweisen. Bei solchen Füllstoffmaterialien liegt in einer ersten Ausführungsform die mittlere Teilchengröße bevorzugt im Bereich von 0,3 mm bis 1,5 mm und besonders bevorzugt im Bereich von 0,5 mm bis 1,0 mm, in einer zweiten Ausführungsform im Bereich von 0,5 mm bis 3,0 mm, besonders bevorzugt im Bereich von 1,0 mm bis 2,0 mm, und in einer dritten Ausführungsform bevorzugt im Bereich von 1,5 mm bis 5,0 mm und besonders bevorzugt im Bereich von 2,0 mm bis 4,0 mm. Hierbei kann z.B. auch auf solche porösen partikulären anorganischen Füllstoffmaterialien zurückgegriffen werden mit einer Kornklasse bzw. Korngröße, auch Korngruppe genannt, im Bereich von 0,1 bis 0,3 mm, 0,1 bis 0,6 mm, 0,1 bis 0,9 mm, 0,25 bis 0,5 mm, 0,25 bis 1,0 mm, 0,25 bis 1,5 mm, 0,5 bis 1,0 mm, 0,5 bis 2,0 mm, 0,5 bis 3,0 mm, 1,0 bis 2,0 mm, 1,0 bis 4,0 mm, 1,0 bis 6,0 mm, 2,0 bis 4,0 mm, 2,0 bis 8,0 mm, 2,0 bis 12,0 mm, 4,0 bis 8,0 mm, 4,0 bis 12,0 mm, 4,0 bis 16,0 mm, 8,0 bis 16,00 mm oder 8,0 bis 16,0 mm. Bevorzugt sind die Korngruppen 0,1 bis 0,3 mm, 0,25 bis 0,5 mm, 0,5 bis 1,0 mm, 1,0 bis 2,0 mm, 2,0 bis 4,0 mm, 4,0 bis 8,0 mm oder 8,0 bis 16,0 mm. In einer bevorzugten Ausführungsform unterscheidet sich die Kornobergrenze von der Kornuntergrenze maximal um den Faktor 4, besonders bevorzugt maximal um den Faktor 3 und insbesondere maximal um den Faktor 2. Selbstverständlich können auch solche Materialien eingesetzt werden, bei denen die Unter- und die Oberkorngrenze sich beispielsweise mindestens um den Faktor 5 oder mindestens um den Faktor 10 unterscheiden. Bei Festlegung des für den erfindungsgemäßen Baukörper zu verwendenden Teilchengrößenbereichs bzw. bei Festlegung der Kornklasse liegen in der Regel eine sogenannte Unterkorn- und eine sogenannte Oberkornfraktion vor. Das heißt der größte Teil der Füllstoffpartikel verfügt über eine Korngröße/Partikelgröße, die im vorangehend angegebenen Bereich der Kornklassen liegt. Für die Bestimmung der vorangehend beschriebenen Korngruppen kann auch auf die Norm EN 13139 zurückgegriffen werden. Bevorzugt liegen bei einem der vorangehend genannten Teilchengrößenbereiche/Kornklassen maximal 15 Gew.-%, bevorzugt maximal 10 Gew.-% und besonders bevorzugt maximal 5 Gew.-%, der Füllstoffpartikel mit einer Teilchengröße oberhalb der oberen Bereichsgrenze/Korngrenze und/oder maximal 20 Gew.-%, bevorzugt maximal 15 Gew.-% und besonders bevorzugt maximal 10 Gew.-% der Füllstoffpartikel mit einer Teilchengröße unterhalb der unteren Bereichsgrenze/Korngrenze vor. Selbstverständlich können auch beliebige Mischungen an Korngruppen, wie vorangehend beschrieben, als poröse partikuläre anorganische Füllstoffmaterialien eingesetzt werden.

Die Korngruppe wird im Allgemeinen durch die Angabe von zwei Siebgrößen (Größen der Begrenzungssiebe) definiert, z.B. die Korngruppe 2,0 bis 4,0 mm, auch 2/4 mm genannt. Dabei wird das untere Begrenzungssieb regelmäßig mit "d" (Nenn-Kleinstkorn) und das obere mit "D" (Nenn-Größtkorn) bezeichnet. In dem genannten Beispiel der Korngruppe 2,0 bis 4,0 mm ist "d" = 2 mm und "D" = 4 mm. In jeder Korngruppe liegen häufig noch Überkorn-Anteile (Anteile > D) und Unterkorn-Anteile (Anteile < d) vor. Demgemäß ist das für die Bezeichnung der Korngruppe angegebene Nenn-Kleinstkorn nicht das in der Korngruppe enthaltene kleinste Korn; ebenso ist das für die Bezeichnung der Korngruppe angegebene Nenn-Größtkorn nicht das größte Korn einer Korngruppe angegebene Korn. Mit anderen Worten: In einer Korngruppe sind auch kleinere Körner enthalten als das Nenn-Kleinstkorn und auch größere Körner als das Nenn-Größtkorn. Für die Siebgrößen kann auf die Werte des Grundsiebsatzes oder die Werten des Grundsiebsatzes und der Ergänzungssiebsätze 1 oder 2 gemäß der EN 12620 zurückgegriffen werden. Der Grundsiebsatz umfasst hierbei die Siebgrößen: 0, 1, 2, 4, 8, 16, 31,5 und 63 mm. Der Ergänzungssiebsatz 1 enthält zusätzlich die Siebgrößen 5,6, 11,2, 22,4 und 45 mm. Der Ergänzungssiebsatz 2 enthält zusätzlich zum Grundsiebsatz die Siebgrößen 6,3, 10, 12,5, 14, 20 und 40 mm. Die Bereichsgrenzen in Form von nicht-ganzen Zahlen werden häufig auch gerundet wiedergegeben.

Es ist demgemäß für die Erlangung von Baukörper mit ausgeprägter mechanischer Festigkeit bei gleichzeitig relativ geringem Gewicht nicht mehr erforderlich, darauf zu achten, dass über die Verwendung von Füllstoffmaterialien mit stark voneinander abweichendem Größenprofil eine möglichst hohe Packungsdichte erhalten wird.

Für das erfindungsgemäße Verfahren wird bevorzugt auf partikuläre anorganische Füllstoffmaterialien mit durchschnittlichem spezifischen Gewicht (bestimmt gemäß EN 1097-6)von weniger als $1 g/cm^3$, insbesondere von 0,5 $g/cm^3$ oder weniger, zurückgegriffen.

Des Weiteren kann in einer zweckmäßigen Ausgestaltung des erfindungsgemäßen Verfahrens vorgesehen sein, dass, bezogen auf die Gesamtmenge an zur Verfügung gestelltem porösen partikulären anorganischen Füllstoffmaterial, 40 bis 80 Gew.-%, bevorzugt 50 bis 75 Gew.-% und besonders bevorzugt 55 bis 65 Gew.-%, an porösem partikulären anorganischen Füllstoffmaterial mit einer mittleren Teilchengröße im Bereich von 0,1 bis 1,0 mm, bevorzugt im Bereich von 0,15 bis 0,75 mm und besonders bevorzugt im Bereich von 0,25 bis 0,5 mm, und 20 bis 60 Gew.-%, bevorzugt 25 bis 50 Gew.-% und besonders bevorzugt 35 bis 45 Gew.-%, an porösem partikulären anorganischen Füllstoffmaterial mit einer mittleren Teilchengröße im Bereich von 1,2 bis 8,0 mm, bevorzugt im Bereich von 1,5 bis 6,0 mm und besonders bevorzugt im Bereich von 2,0 bis 4,0 mm, eingesetzt werden.

Das erfindungsgemäße Verfahren zeichnet sich ferner in einer bevorzugten Ausgestaltung dadurch aus, dass der Pressdruck größer 1,0 $N/mm^2$, bevorzugt größer oder gleich 1,5 $N/mm^2$ und besonders bevorzugt größer 2,0 $N/mm^2$, ist. Mit dem erfindungsgemäßen Verfahren wird das poröse partikuläre anorganische Füllstoffmaterial beim Verpressen mit dem aushärtenden bzw. ausgehärteten Epoxidharz einem derart hohen Pressdruck ausgesetzt, der dazu führt, dass diese Füllstoffmaterialien zumindest in Teilen in Bruchstücke zerteilt bzw. aufgebrochen werden. Demgemäß wird das Verfahren in der Weise geführt, dass der Verlust der ursprünglichen Form der zur Verfügung gestellten Füllstoffmaterialien zumindest in Teilen angestrebt und umgesetzt wird. Auf diese Weise gelingt eine sehr kompakte Schichtung bzw. Verteilung des Füllstoffmaterials, wobei gleichzeitig die für die Anbindung an das aushärtende Epoxidharz verfügbare Fläche vergrößert wird. Dieser Effekt wird auch noch dadurch verstärkt, dass es sich bei dem Füllstoffmaterial um partikuläres poröses Material handelt. Durch das Aufbrechen der Struktur dieser Füllstoffmaterialien beim Verpressvorgang wird eine Vielzahl an porösen Bereichen offengelegt, was zu einer signifikanten Vergrößerung der für die Anbindung mit dem Bindemittel verfügbaren Fläche führt. Wenngleich mit dem erfindungsgemäßen Verfahren mit relativ hohen Pressdrücken gearbeitet wird, sind nicht nur Baukörper, insbesondere Bauplatten, zugänglich, die über ihre gesamte Dicke gleichmäßig stark verpresst sind, vielmehr sind auch solche Baukörper, insbesondere Bauplatten, zugänglich, die in ihren Außenbereichen stärker verpresst sind als im Innenbereich.

Optional umfasst das erfindungsgemäße Verfahren auch die Zurverfügungstellung von mindestens einem Hydrophobierungsmitteln (Schritt e)), beispielsweise in Form eines Silikonharzes. Das erfindungsgemäße Verfahren zeichnet sich ferner dadurch aus, dass in einer bevorzugten Ausgestaltung das Epoxidharz, der Epoxidharz-Härter, das poröse partikuläre anorganische Füllstoffmaterial, der Reaktiwerdünner, das Hydrophobierungsmittel und/oder die gemäß Schritt f) erhaltene Mischung lösemittelfrei sind. Das erfindungsgemäße Verfahren zeichnet sich demgemäß auch dadurch aus, dass es ohne bzw. nur mit einer sehr geringen Menge an Lösemitteln durchgeführt werden kann.

Das erfindungsgemäße Verfahren erfordert die Beaufschlagung der nach Schritt f) erhaltenen Mischung mit Wärme, d.h. der Mischung ist in einer zweckmäßigen Ausgestaltung in dem Formbehältnis Wärmeenergie zuzuführen. Demgemäß beinhaltet das Verfahren das Erwärmen der Mischung gemäß Schritt f) in dem Formbehältnis auf Temperaturen oberhalb der Raumtemperatur, d.h. oberhalb von 18°C. In einer besonders geeigneten Ausführungsvariante ist vorgesehen, das die in dem Formbehältnis vorliegende Mischung, insbesondere während der Beaufschlagung mit dem Pressdruck, eine Temperatur im Bereich von 60 bis 160°C, insbesondere im Bereich von 80 bis 140°C, aufweist bzw. auf eine solche Temperatur erwärmt wird. Für die Erwärmung der Mischung in dem Formbehältnis reicht es regelmäßig aus, wenn der Boden des Formbehältnisses sowie gegebenenfalls der Pressstempel, zum Beispiel die Pressplatte, beim Pressvorgang, insbesondere auf die vorangehend genannten Temperaturen, erwärmt sind. Auf diese Weise kann hinreichend Wärmeenergie in die in dem Formbehältnis vorliegende Mischung eingetragen werden, um den Aushärtvorgang zu initiieren bzw. zu forcieren. Besonders bevorzugte Pressstempel umfassen eine Metallplatte, insbesondere eine Metallplatte, oder sind aus Metall, insbesondere Aluminium, gebildet. Indem Wärmeenergie beim Pressvorgang in die in dem Formbehältnis vorliegende Mischung eingetragen wird, wird nicht nur die vollständige Aushärtung herbeigeführt, ebenfalls trägt die Erwärmung zu einer Verringerung der Viskosität der Mischung aus den Komponenten, die das ausgehärtete Epoxidharz bilden, insbesondere erhalten gemäß Schritt f1), bei, wodurch auch eine bessere und vollständigere Einbettung der Füllstoffpartikel sowie der Bruchstücke dieser Füllstoffpartikel gelingt. Außerdem fördert dieser Wärmeeintrag die Benetzung der anorganischen Partikel mit dem Bindemittel. Es hat sich überraschend gezeigt, dass auch mit sehr dünnen Bindemittelfilmen zwischen benachbarten Füllstoffpartikeln und den Bruchstücken hiervon, die sich bei Verwendung der mit dem erfindungsgemäßen Verfahren verwendeten hohen Pressdrücke, die zur zumindest teilweisen Zerstörung der Füllstoffpartikel führen, gleichwohl eine sehr feste Anbindung einstellt. Demgemäß erlaubt es das erfindungsgemäße Verfahren, den Bindemittelanteil sehr gering zu halten, beispielsweise unterhalb von 10 Gewichtsprozent oder sogar unterhalb von 7 Gewichtsprozent.

Zur Herbeiführung eines beschleunigten Herstellungsverfahrens mit kurzen Taktzeiten wird vorzugsweise auf ein Formbehältnis mit sehr guter Wärmeleitfähigkeit zurückgegriffen. Hierbei kommen insbesondere solche Formbehältnisse zum Einsatz, die aus einem Material gebildet sind mit einer Wärmeleitfähigkeit größer oder gleich 150 W/(m • K) und bevorzugt größer 200 W/(m • K). In einer besonders bevorzugten Ausführungsform des erfindungsgemäßen Verfahrens ist das Formbehältnis aus Aluminium oder Kupfer oder einer Aluminiumlegierung oder einer Kupferlegierung gebildet. Ganz allgemein hat sich gezeigt, dass durch Einbringung von Wärme in die in dem Formbehältnis vorliegende Mischung der Herstellprozess beschleunigt, das heißt die Taktzeiten reduziert werden können.

Selbstverständlich ist es möglich, während des Herstellungsprozesses weitere Komponenten wie Alkylphenole, insbesondere p-tert-Butylphenol, und/oder Hydrophobierungsmittel wie Silikonharze zuzugeben. Vorteilhafterweise werden diese Komponenten in dem Verfahrensschritt f) zu dem Epoxidharz und/oder dem Reaktivverdünner sowie dem Epoxidharz-Härter oder einer beliebigen Mischung dieser Komponenten gegeben. Alkylphenole werden in einer bevorzugten Ausführungsform des erfindungsgemäßen Verfahrens dem Epoxid-Härter zugesetzt, insbesondere in lösemittelfreier Form.

Als besonders vorteilhaft hat sich ein solches Verfahren herausgestellt, bei dem der Schritt f) unterteilt ist in

f1) Vermischen von Epoxidharz mit Epoxidharz-Härter und gegebenenfalls Alkylphenol und/oder Hydrophobierungsmittel oder

Vermischen des mindestens einen Reaktivverdünners mit Epoxidharz-Härter und gegebenenfalls Alkylphenol und/oder Hydrophobierungsmittel oder Vermischen von Epoxidharz und Reaktivverdünner mit Epoxidharz-Härter und gegebenenfalls Alkylphenol und/oder Hydrophobierungsmittel und

f2) Vermischen der in Schritt f1) erhaltenen Mischung mit dem porösen partikulären anorganischen Füllstoffmaterial in der Weise, dass das Epoxidharz und/oder der Reaktivverdünner nicht oder nicht vollständig ausgehärtet wird.

Hierbei ist es besonders vorteilhaft, wenn das Epoxidharz oder die gemäß Schritt f1) erhaltene Mischung vor und/oder bei der Mischung mit dem porösen partikulären anorganischen Füllstoffmaterial über eine Viskosität (bestimmt bei 25°C) nicht oberhalb von 500 mPas, bevorzugt nicht oberhalb von 400 mPas und besonders bevorzugt nicht oberhalb von 200 mPas verfügt. Solche Epoxidharze sind besonders geeignet, die im ausgehärteten Zustand über eine Glasübergangstemperatur von mindestens 60°C, bevorzugt von mindestens 70°C, besonders bevorzugt von mindestens 80 °C, verfügen. In einer bevorzugten Ausgestaltung des Verfahrens werden das gemäß Schritt a) zur Verfügung gestellte Epoxidharz und der gemäß Schritt b) zur Verfügung gestellte Epoxidharz-Härter vor der Zugabe zu dem porösen partikulären anorganischen Füllstoffmaterial miteinander, insbesondere intensiv, vermischt. Vorzugsweise wird die erhaltene Mischung unverzüglich zu dem porösen partikulären anorganischen Füllstoffmaterial gegeben. Des Weiteren hat es sich als zweckmäßig erwiesen, wenn zu dem Epoxidharz gleichzeitig oder vorab das Hydrophobierungsmittel zugegeben wird. Ferner werden in einer bevorzugten Ausführungsform des erfindungsgemäßen Verfahrens die Alkylphenole dem Epoxid-Härter zugesetzt, insbesondere in lösemittelfreier Form. Epoxid-Härter im Sinne der Erfindung umfassen ebenfalls Verbindungen, soweit dies erforderlich ist, mit denen die vorliegend beschriebenen Reaktivverdünner ausgehärtet werden können.

Das Gewichtsverhältnis von Epoxidharz zu Härter wird vorteilhafter Weise im Bereich von 200 : 30 bis 50 : 30, vorzugsweise im Bereich von 150 : 30 bis 75 : 30, eingestellt.

Es hat sich überraschender Weise gezeigt, dass es mit dem erfindungsgemäßen Verfahren möglich ist, Baukörper zu erhalten, die nur über einen sehr geringen Anteil an Epoxidharz verfügen, ohne Einbußen bei der mechanischen Festigkeit in Kauf nehmen zu müssen. Demgemäß kann in einer vorteilhaften Ausgestaltung der Gewichtsanteil an Epoxidharz und/oder Reaktiwerdünner und gegebenenfalls dem Epoxidharz-Härter, bezogen auf das Gesamtgewicht an dem porösen partikulären anorganischen Füllstoffmaterial und dem Epoxidharz und/oder Reaktivverdünner sowie gegebenenfalls dem Epoxidharz-Härter unterhalb von 12 %, bevorzugt bei 8,0 % oder darunter und besonders bevorzugt bei 7,0 % oder darunter, liegen. Insbesondere wenn diese Anteile bei 8,0 % oder darunter oder bei 7,0 % oder darunter liegen, erhält man Baukörper, die eine geringere Brandneigung besitzen als die aus dem Stand der Technik bekannten Baukörper bzw. Leichtbaukörper. Mit solchen Baukörpern, insbesondere Bauplatten, wird verlässlich ein Brennwert kleiner oder gleich 3 MJ/kg erhalten (bestimmt nach DIN EN ISO 1716:2010-11).

Zur Verringerung der Taktzeiten und/oder zur Verminderung von Ausschussware kann man in einer Ausgestaltung das Formbehältnis mit bzw. dessen Wandungen mit einem Trennmittel behandeln. Hierbei kommen regelmäßig Wachsverbindungen zum Einsatz.

Insbesondere wenn besondere Anforderungen an die Festigkeit und Steifigkeit eines mit dem erfindungsgemäßen Verfahren erhältlichen Baukörpers, insbesondere einer Bauplatte, gestellt werden, hat es sich als vorteilhaft erwiesen, mindestens eine Seite des Baukörpers bzw. der Bauplatte mit einem Lagenmaterial zu versehen. Hierbei kann es sich zum Beispiel um eine gewirkte, gewebte, oder eine gestrickte Lage oder um eine Vlieslage handeln. Zweckmäßigerweise wird für das Lagenmaterial auf ein sogenanntes Armierungsgewebe zurückgegriffen. Solche Armierungsgewebe kommen regelmäßig bei Putzbeschichtungen zum Einsatz. Eine einseitige Beschichtung des Baukörpers bzw. der Bauplatte kann entweder dadurch erhalten werden, dass man das Lagenmaterial in das Formbehältnis einlegt, bevor die Mischung gemäß Schritt f) in dieses Formbehältnis gegeben wird. Alternativ ist es möglich, zunächst die Mischung gemäß Schritt f) in das Formbehältnis einzufüllen und anschließend hierauf ein Lagenmaterial aufzulegen, bevor die Mischung mit Druck (Schritt k)) beaufschlagt wird. Selbstverständlich lassen sich mit dem erfindungsgemäßen Verfahren ohne weiteres auch Baukörper bzw. Bauplatten erhalten, die beidseitig mit dem Lagenmaterial beschichtet bzw. versehen sind. Hierfür sind die beiden vorangehend genannten Einzelschritte miteinander zu kombinieren. Demgemäß umfasst das erfindungsgemäße Verfahren in einer Ausgestaltung ferner den/die Schritte:

g) Behandeln des Formbehältnisses, insbesondere derjenigen Wandungen des Formbehältnisses, die in Kontakt mit der Mischung gemäß Schritt f) geraten, mit mindestens einem Trennmittel, insbesondere einem Wachs, und/oder

h) Einlegen einer ersten Lage in das Formbehältnis, bevor die Mischung gemäß Schritt f) in das Formbehältnis gemäß Schritt i) gegeben wird und/oder

j) Auflegen mindestens einer zweiten Lage auf die in das Formbehältnis gegebene Mischung, bevor die Beaufschlagung mit Druck gemäß Schritt k) erfolgt.

Hierbei führt ein solches Verfahren in besonders zuverlässiger Weise zu Baukörpern, insbesondere Bauplatten, mit ausreichender mechanischer Festigkeit, insbesondere ausreichender Biegezugfestigkeit, bei dem darauf geachtet wird, dass der Anteil an Epoxidharz und Epoxidharz-Härter sowie gegebenenfalls Alkylphenol und/oder Hydrophobierungsmittel oder der Anteil an Reaktivverdünner und Epoxidharz-Härter sowie gegebenenfalls Alkylphenol und/oder Hydrophobierungsmittel oder der Anteil an Epoxidharz, Reaktiwerdünner und Epoxidharz-Härter sowie gegebenenfalls Alkylphenol und/oder Hydrophobierungsmittel und die Dichte des mit erfindungsgemäßen Verfahren erhaltenen Baukörpers derart gewählt oder eingestellt werden, dass das Produkt aus 1) dem Anteil an Epoxidharz und Epoxidharz-Härter sowie gegebenenfalls Alkylphenol und/oder Hydrophobierungsmittel oder dem Anteil an Reaktivverdünner und Epoxidharz-Härter sowie gegebenenfalls Alkylphenol und/oder Hydrophobierungsmittel oder dem Anteil an Epoxidharz, Reaktiwerdünner und Epoxidharz-Härter sowie gegebenenfalls Alkylphenol und/oder Hydrophobierungsmittel und 2) der Dichte des mit dem Verfahren erhaltenen Baukörpers, bestimmt in kg/m$^3$, größer oder gleich 25 kg/m$^3$ und bevorzugt größer oder gleich 30 kg/m$^3$ ist sowie besonders bevorzugt im Bereich von 33 kg/m$^3$ bis 37 kg/m$^3$ liegt, insbesondere bei etwa 35 kg/m$^3$. Das aufgefundene Resultat stellt sich insbesondere bei Verwendung von Bauplatten, vorzugsweise Putzträgerplatten, oder von aus Baukörpern erhaltenen Testkörpern in Plattenform mit einer Dicke von etwa 12 mm ein.

Außerdem sieht eine Weiterentwicklung dieser bevorzugten Variante des erfindungsgemäßen Verfahrens insbesondere mit Blick auf den Erhalt einer verlässlich guten mechanischen Festigkeit, vorzugsweise Biegezugsfestigkeit vor, dass der Anteil an Epoxidharz und Epoxidharz-Härter sowie gegebenenfalls Alkylphenol und/oder Hydrophobierungsmittel oder der Anteil an Reaktiwerdünner und Epoxidharz-Härter sowie gegebenenfalls Alkylphenol und/oder Hydrophobierungsmittel oder der Anteil an Epoxidharz, Reaktivverdünner und Epoxidharz-Härter sowie gegebenenfalls Alkylphenol und/oder Hydrophobierungsmittel und die Dichte des mit dem Verfahren erhaltenen Baukörpers und die Gesamtoberfläche an porösem partikulären anorganischen Füllstoffmaterial derart gewählt oder eingestellt werden, dass das Produkt aus 1) dem Anteil an Epoxidharz und Epoxidharz-Härter sowie gegebenenfalls Alkylphenol und/oder Hydrophobierungsmittel oder dem Anteil an Reaktivverdünner und Epoxidharz-Härter sowie gegebenenfalls Alkylphenol und/oder Hydrophobierungsmittel oder dem Anteil an Epoxidharz, Reaktivverdünner und Epoxidharz-Härter sowie gegebenenfalls Alkylphenol und/oder Hydrophobierungsmittel, 2) der Dichte des mit dem Verfahren erhaltenen Baukörpers, bestimmt in kg/m$^3$, und 3) der Gesamtoberfläche des gemäß Schritt c) zur Verfügung gestellten porösen partikulären anorganischen Füllstoffmaterials, bestimmt in m$^2$/kg, größer oder gleich 300/m und bevorzugt größer oder gleich 400/m ist und besonders bevorzugt im Bereich von 450/m bis 550/m, insbesondere bei etwa 500/m, liegt. Auch hier stellt sich das aufgefundene Resultat insbesondere bei Verwendung von Bauplatten, vorzugsweise Putzträgerplatten, oder von aus Baukörpern erhaltenen Testkörpern in Plattenform mit einer Dicke von etwa 12 mm ein.

Mit den vorangehend geschilderten gefundenen Verfahrensvarianten ist es möglich, durch Einstellung der Bindemittelanteile und gegebenenfalls der Gesamtoberfläche des gemäß Schritt c) zur Verfügung gestellten porösen partikulären anorganischen Füllstoffmaterials sowie unter Berücksichtigung der angestrebten Dichte der mit dem erfindungsgemäßen Verfahren hergestellten Baukörper, insbesondere Bauplatten, verlässlich und reproduzierbar zu Produkten mit hinreichender Festigkeit, insbesondere Biegezugfestigkeit, zu gelangen. Zum Beispiel können mit dem erfindungsgemäßen Verfahren selbst für Baukörper, insbesondere Bauplatten, mit sehr kleiner Dichte durch Wahl eines relativ hohen Bindemittelanteils, beispielsweise im Bereich von 20 bis 25 Gewichtsprozent, bezogen auf das Gesamtgewicht des Baukörpers, ausreichende Festigkeiten erhalten werden.

Die auf eine vorgegebene Masse bezogene Gesamtoberfläche des gemäß Schritt c) zur Verfügung gestellten porösen partikulären anorganischen Füllstoffmaterials lässt sich wie folgt ermitteln:

$$\text{Kornoberfläche pro Masse} = (\text{Kornoberfläche pro Volumen des porösen partikulären anorganischen Füllstoffmaterials}) / (\text{mittlere Partikeldichte einer Mischung}).$$

Das Volumen des porösen partikulären anorganischen Füllstoffmaterials stellt hierbei nicht das Schüttvolumen, sondern das tatsächliche Volumen des partikulären Füllstoffmaterials dar. Die Kornoberfläche pro Volumen des porösen partikulären anorganischen Füllstoffmaterials kann mithilfe der mit einem Laserbeugungsspektrometer ermittelten Kornzusammensetzung bestimmt werden. Hierbei wird jede Partikelfraktion einzeln betrachtet, wie nachfolgend im Detail noch ausgeführt wird. Zur Ermittlung der Kornoberfläche wird nicht der Mittelwert der betrachteten Partikelfraktion herangezogen, sondern dessen obere Grenze. Die Summe der auf diese Weise erhaltenen Einzelwerte liefert die Kornoberfläche pro Volumen aller Partikel. Liegen die Korngrenzen einer Partikelfraktion beispielsweise bei 0,5 und 1,0 mm, ist deren Partikelvolumenanteil an der Gesamtmischung mit dem Faktor (6/1,0 mm) zu multiplizieren. Die hier zur Anwendung kommende Berechnung der Kornoberfläche geht von der Annahme aus, dass sämtliche Partikel kugelförmig sind. Auch wird angenommen, dass diese Partikel eine geschlossene kugelförmige Oberfläche aufweisen. Diese Annahmen liegen im Grunde auch der Messung mit dem Laserbeugungsspektrometer zu Grunde. Ein kugelförmiger Partikel mit Spalten und Riefen wird folglich nicht anders behandelt als ein kugelförmiger Partikel mit einer geschlossenen Oberfläche. Beide Partikel verfügen im Grunde in einer Mischung über den gleichen Platzbedarf bei gleichem Durchmesser. Für die Bestimmung der Kornoberfläche kann z.B. auf die nachfolgend genannten Kornklassen, die durch jeweils aufeinander folgende Werte für die Korngrenzen (Durchmesser in $\mu$m) festgelegt werden, ermittelt werden: 0,011 0,013 0,015 0,017 0,020 0,023 0,026 0,030 0,034 0,039 0,044 0,051 0,058 0,067 0,076 0,087 0,100 0,115 0,131 0,150 0,172 0,197 0,2 26 0,259 0,296 0,339 0,389 0,445 0,510 0,584 0,669 0,766 0,877 1,00 5 1,151 1,318 1,510 1,729 1,981 2,269 2,599 2,976 3,409 3,905 4,472 5,1 22 5,867 6,720 7,697 8,816 10,09 11,56 13,24 15,17 17,37 19,90 22,79 26,11 29,90 34,25 39,23 44,93 51,47 58,95 67,52 77,34 88,58 101,4 116,2 133,1 152,4 174,6 200,0 229,0 262,3 300,5 344,2 394,2 451,5 517,2 592,3 678,5 777,1 890,1 1019 1167 1337 1531 1754 2009 2301 2636 3019 3458 3961 4537 5197 5952 6817 7809, 8944 10244.

Die vorangehend wiedergegebenen Bereichsgrößen der aufeinander folgenden Kornklassen verhalten sich logarithmisch und nicht etwa linear. Die Korngrenzen der Kornklassen werden regelmäßig durch das eingesetzte Laserbeugungsspektrometer vorgegeben, wobei den Ober- und Untergrenzen der jeweiligen Kornklassen eine logarithmische Abstandsbestimmung zugrunde liegt.

Das partikuläre Füllstoffmaterial und das Reaktionsharz, umfassend Epoxidharz und/oder Reaktivverdünner, können in herkömmlichen Mischaggregaten miteinander vermengt werden. In einer bevorzugten Ausgestaltung ist das Mischaggregat gleichzeitig auch das Förderaggregat, beispielsweise in Form eines Schneckenförderers, mit dessen Hilfe die Mischung zu dem Formbehältnis transportiert und in dieses eingefüllt wird. So kann das Mischaggregat neben den Elementen des Schneckenförderers auch Mischelemente, beispielsweise in Form von Stiften, die in dem Schneckenförderer angebracht sind, aufweisen, so dass in dem Förderer die einzelnen Komponenten nicht nur transportiert, sondern auch miteinander vermischt werden. Hierbei hat es sich als sehr zweckmäßig erwiesen, dass Förderrohr geneigt zu positionieren, so dass die Materialförderung durch die Einwirkung der Schwerkraft unterstützt wird. Der Mischvorgang wird dazu genutzt, die Oberfläche der Füllstoffpartikel mit der bzw. den Bindemittelkomponenten zu benetzen. Bei diesem Vorgang ist es vorteilhaft, Bindemittelkomponenten mit geringer Viskosität einzusetzen, die darüber hinaus vorteilhafterweise während des Prozesses des Mischens ihre niedrige Viskosität beibehalten. Auch ist es von Vorteil, wenn diese Bindemittelkomponenten ein hohes Benetzungsvermögen aufweisen. Indem die Füllstoffpartikel beim Pressvorgang zerstört bzw. aufgebrochen und dabei neue Oberflächen geschaffen werden, können die niedrigviskosen und gut benetzenden Bindemittelkomponenten auch mit diesen neuen Oberflächen wechselwirken bzw. an diese anbinden. Der Pressdruck, der auf die nach Schritt f) erhaltene Mischung in dem Formbehältnis ausgeübt wird, ist hinreichend hoch, um zumindest eine partielle Zerstörung der Füllstoffpartikel zu bewirken. Hierbei kann in einer besonders vorteilhaften Ausführungsform vorgesehen sein, dass der Pressvorgang beinhaltet, dass nicht der gesamte Baukörper, insbesondere die Bauplatte, während des Pressvorgangs gleichförmig mit dem Pressdruck beaufschlagt wird, sondern dass Areale des Baukörpers, insbesondere der Bauplatte, sukzessive mit dem Pressdruck beaufschlagt werden, beispielsweise durch Verwendung einer Pressplatte, die über mindestens zwei, insbesondere mindestens vier Pressstempel angefahren wird. In dem Formbehältnis wird die Mischung nicht nur verpresst, sondern regelmäßig ebenfalls über einen bestimmten Zeitraum erhöhten Temperaturen, vorzugsweise im Bereich von 80 bis 140°C ausgesetzt. Während dieser Aushärt- bzw. Haltephase kann der Haltedruck gegenüber dem anfänglichen Pressdruck abnehmen. Bevorzugt stellt das Bindemittel ein lösemittelfreies zweikomponentiges Epoxidharz aus einerseits Epoxidharz-Härter und andererseits Bisphenol A, Bisphenol F und einem Reaktivverdünner dar. Das Bindemittelsystem, exklusive Epoxidharz-Härter, insbesondere umfassend oder bestehend aus Bisphenol A, Bisphenol F und dem Reaktivverdünner wird vorzugsweise derart eingestellt, dass es bei einer Temperatur von 25°C über eine Viskosität von nicht mehr als 550 mPas verfügt. Besonders gute Eigenschaften lassen sich auch durch Mitverwendung von einem Alkylphenol, insbesondere einem niedrigviskosen Alkylphenol erzielen. Durch den Einsatz solcher Alkylphenole kann die Benetzung der partikulären Füllstoffmaterialien bzw. der Bruchstücke aus diesen Materialien mit den Bindemittelkomponenten bzw. dem Bindemittel verbessert werden. Auch hat sich als vorteilhaft erwiesen, dass sich durch Verwendung solcher Alkylphenole nach dem Aushärten eine geringe bis mittlere Hydrophobierung ausbildet, die einerseits einen Grundschutz gegen übermäßige Wasseraufnahme bietet, andererseits noch stets eine gute Haftung einer Putzbeschichtung zulässt, und zwar ohne dass ein Primer zu verwenden ist. Alkylphenole werden bevorzugt zu dem Epoxid-Härter gegeben, bevor dieser Härter zu dem Epoxidharz und/oder dem Reaktivverdünner gegeben wird.

Die der Erfindung zugrunde liegende Aufgabe wird des weiteren gelöst durch einen Baukörper, insbesondere ein Bauprofil oder eine Bauplatte, zum Beispiel eine Putzträger- oder Sockelschutzplatte, erhältlich nach dem erfindungsgemäßen Verfahren, wie vorangehend geschildert. Diese erfindungsgemäßen Baukörper verfügen in einer zweckmäßigen Ausgestaltung über eine Dichte kleiner oder gleich 800 kg/m$^3$, vorzugsweise kleiner oder gleich 600 kg/m$^3$.

Demgemäß ist Gegenstand der Erfindung ebenfalls ein Baukörper, insbesondere Bauprofil oder Bauplatte, z.B. Putzträger- oder Sockelschutzplatte, umfassend oder bestehend aus mittels Epoxidharz-Härter ausgehärtetem Epoxidharz als Bindemittelmatrix oder mittels Epoxidharz-Härter ausgehärtetem Reaktiwerdünner als Bindemittelmatrix oder mittels Epoxidharz-Härter ausgehärtetem Epoxidharz und Reaktivverdünner als Bindemittelmatrix und darin eingebettet einer Vielzahl an Bruchstücken aus einem, insbesondere im Wesentlichen sphärischen, porösen partikulären anorganischen Füllstoffmaterials sowie gegebenenfalls mindestens einem Hydrophobierungsmittel und/oder Alkylphenol und/oder aus porösen partikulären anorganischen Füllstoffmaterial.

Zweckmäßige erfindungsgemäße Baukörper zeichnen sich in einer bevorzugten Ausführungsvariante auch dadurch aus, dass dieser enthält oder besteht aus

A1) ausgehärtetem Epoxidharz als Bindemittelmatrix, gebildet in Gegenwart von Epoxidharz und Epoxidharz-Härtern sowie gegebenenfalls von Alkylphenolen und/oder mindestens einem Hydrophobierungsmittel oder

A2) ausgehärtetem Reaktivverdünner als Bindemittelmatrix, gebildet in Gegenwart von Reaktiwerdünner und Epoxidharz-Härtern sowie gegebenenfalls von Alkylphenolen und/oder mindestens einem Hydrophobierungsmittel oder

A$_3$) der ausgehärteten Mischung aus Epoxidharz und Reaktivverdünner als Bindemittelmatrix, gebildet in Gegenwart von Epoxidharz, Reaktivverdünner und Epoxidharz-Härtern sowie gegebenenfalls von Alkylphenolen und/oder mindestens einem Hydrophobierungsmittel,

und B) porösem partikulären anorganischen Füllstoffmaterial.

Erfindungsgemäße Baukörper zeichnen sich insbesondere auch dadurch aus, dass die porösen partikulären anorganischen Füllstoffmaterialen zumindest in Teilen zerstört in Form von Bruchstücken in der Bindemittelmatrix vorliegen und dass das ausgehärtete Epoxidharz die beim Pressen entstandenen Bruchstücke der, insbesondere sphärischen, Füllstoffmaterialien einbindet, insbesondere miteinander verklebt.

Die erfindungsgemäßen Baukörper bzw. Bauplatten verfügen vorzugsweise über eine maximale Biegezugfestigkeit $F_{max}$, bestimmt gemäß DIN EN 1015 - Teil 11, Ausgabe 2007, insbesondere wenn an Bauplatten oder an aus Baukörpern erhaltenen Testkörpern in Plattenform, jeweils mit einer Dicke von etwa 12 mm, geprüft, von 1,5 N/mm$^2$ oder darüber und bevorzugt von 2,0 N/mm$^2$ oder darüber sowie besonders bevorzugt im Bereich von 2,3 N/mm$^2$ bis 2,8 N/mm$^2$, insbesondere von etwa 2,5 N/mm$^2$.

Besonders geeignete Baukörper, insbesondere Bauplatten, zeichnen sich durch eine erste Lage, insbesondere auf oder in einer ersten Seite der Bauplatte vorliegend, und/oder eine zweite Lage, insbesondere auf oder in einer der ersten Seite gegenüberliegenden zweiten Seite der Bauplatte vorliegend, aus, wobei die erste und/oder zweite Lage vorzugsweise eine gewirkte, gewebte oder gestrickte Lage oder eine Vlieslage, insbesondere ein Armierungsgewebe, darstellt.

Außerdem lässt sich mit den erfindungsgemäßen Baukörpern ein sehr gutes Brandschutzverhalten erreichen, und das, obwohl eine organische Bindemittelmatrix zum Einsatz kommt. Demgemäß sind bevorzugte erfindungsgemäße Baukörper durch einen Brennwert kleiner oder gleich 3 MJ/kg gekennzeichnet (bestimmt nach DIN EN ISO 1716: 2010-11), sogar inklusive der beschriebenen ersten und/oder zweiten Lagen, z.B. in Form von Armierungsgewebe.

Der vorliegenden Erfindung liegt die überraschende Erkenntnis zugrunde, dass sich, ohne auf eine möglichst hohe Packungsdichte der verwendeten partikulären Füllstoffmaterialien achten zu müssen, Baukörper, insbesondere Leichtbaukörper, mit einer sehr hohen mechanischen Festigkeit erhalten lassen. Es hat sich ferner gezeigt, dass die erfindungsgemäßen Baukörper, insbesondere Bauplatten, einen sehr wirksamen Schallschutz bieten, insbesondere wenn diese Baukörper bzw. -platten bei einer hinterlüfteten Vorhangfassade eingesetzt werden. Auch kann bei einer Vorhangfassade mit einer erfindungsgemäßen Bauplatte der Zwischenraum zwischen Gebäudehülle und Bauplatte mit beliebigem Wärmedämmmaterial gefüllt werden, ohne auf die Festigkeit des Dämmmaterials achten zu müssen. Denn eine hinreichende Festigkeit wird bereits mit der erfindungsgemäßen Bauplatte zur Verfügung gestellt. Es hat sich überraschend gezeigt, dass die nach dem erfindungsgemäßen Verfahren erhältlichen Bauplatten und Baukörper bzw. die erfindungsgemäßen Baukörper und Bauplatten ein hohes Maß an mechanischer Stabilität bieten und beispielsweise Schraubenköpfen einen ausreichenden Widerstand entgegenbringen, so dass diese nicht durchrutschen bzw. durchdrehen. Auch hat sich gezeigt, dass die Bauplatten gemäß der vorliegenden Erfindung sich unter Belastung nicht oder nur wenig verbiegen und darüber hinaus hinreichend schlagfest sind. Dadurch dass man mit dem erfindungsgemäßen Verfahren bereits unter Verwendung nur einer Körnung, d.h. Korngröße bzw. Korngrößenfraktion an partikulärem Füllstoffmaterial zu Baukörpern bzw. Bauplatten mit ausgeprägter mechanischer Festigkeit gelangt, kann der Aufwand für den Transport und die Lagerung von Füllstoffmaterialien erheblich reduziert werden. Mit dem erfindungsgemäßen Verfahren ist es somit nicht länger erforderlich, partikuläre Füllstoffmaterialien mit signifikant unterschiedlichen mittleren Teilchengrößen zu mischen, um zu einer möglichst geringen Packungsdichte zu gelangen. Insbesondere kommt man unabhängig von der Schwankungsbreite bei der Schüttdichte von partikulären Füllstoffmaterialien zu verlässlich guten Ergebnissen mit dem erfindungsgemäßen Verfahren. Des Weiteren hat sich als vorteilhaft erwiesen, dass, obwohl von einer organischen Bindemittelmatrix Gebrauch gemacht wird, ein hoher Brandschutz möglich ist. Auch ist von Vorteil, dass eine hinreichend hohe mechanische Festigkeit bereits mit sehr geringen Mengen an Bindemittel, das heißt an Epoxidharz und/oder Reaktivverdünner, erhalten werden kann. Außerdem haften mineralische Putzbeschichtungen gut und dauerhaft an den erfindungsgemäßen Baukörpern bzw. Bauplatten, und zwar ohne dass diese zuvor mit einem Primer zu behandeln sind. Schließlich zeichnet sie das erfindungsgemäße Verfahren durch eine sehr einfache und zuverlässige Handhabung aus. Dadurch, dass sehr dünnflüssige Epoxidharze bzw. Reaktivverdünner verwendet werden können, sind sehr kurze Taktzeiten beim beheizten Pressen gemäß Schritt k) möglich. Vielfach können die Baukörper bzw. Bauplatten bereits nach wenigen Minuten aus dem Formbehältnis wieder entnommen werden. Von Vorteil ist ebenfalls, dass sich mit dem erfindungsgemäßen Verfahren eine gewünschte mechanische Stabilität durch Einstellung bzw. Verringerung der Bindemittelanteile und/oder der Variation der gewünschten Zieldichte erhalten lässt.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1.   Verfahren zur Herstellung eines Baukörpers, insbesondere einer Bauplatte, umfassend die Schritte

a) Zurverfügungstellung mindestens eines Epoxidharzes, insbesondere Bisphenol A und/oder Bisphenol F, und/oder der das Epoxidharz bildenden Komponenten, und/oder
Zurverfügungstellung mindestens eines Reaktivverdünners,
b) Zurverfügungstellung mindestens eines Epoxidharz-Härters,
c) Zurverfügungstellung mindestens eines porösen partikulären anorganischen Füll stoffmaterials,
f) Vermischen von
Epoxidharz und/oder Reaktivverdünner und
Epoxidharz-Härter und porösem partikulären anorganischen Füllstoffmaterial in der Weise, dass das Epoxidharz und/oder der Reaktivverdünner nicht oder nicht vollständig ausgehärtet werden,
i) Einbringen der in Schritt f) erhaltenen Mischung in ein Formbehältnis,
k) Beaufschlagen der in dem Formbehältnis vorliegenden Mischung mit Wärme und Pressdruck,
wobei der Pressdruck derart eingestellt wird, dass mindestens ein Teil des porösen partikulären anorganischen Füllstoffmaterials in dem Formbehältnis in Bruchstücke zerkleinert wird und wobei diese Zerkleinerung stattfindet, bevor und/oder während das Epoxidharz und/oder der Reaktivverdünner durch Einwirkung des Epoxidharz-Härters und gegebenenfalls durch Einwirkung von Wärme aushärtet, und
l) Entnehmen des Baukörpers aus dem Formbehältnis,
wobei der Anteil an Epoxidharz und Epoxidharz-Härter sowie gegebenenfalls Alkylphenol und/oder Hydrophobierungsmittel oder
der Anteil an Reaktivverdünner und Epoxidharz-Härter sowie gegebenenfalls Alkylphenol und/oder Hydrophobierungsmittel oder

der Anteil an Epoxidharz, Reaktivverdünner und Epoxidharz-Härter sowie gegebenenfalls Alkylphenol und/oder Hydrophobierungsmittel und die Dichte des mit dem Verfahren erhaltenen Baukörpers derart gewählt oder eingestellt werden, dass das Produkt aus 1) dem Anteil an Epoxidharz und Epoxidharz-Härter sowie gegebenenfalls Alkylphenol und/oder Hydrophobierungsmittel oder

dem Anteil an Reaktivverdünner und Epoxidharz-Härter sowie gegebenenfalls Alkylphenol und/oder Hydrophobierungsmittel oder

dem Anteil an Epoxidharz, Reaktivverdünner und Epoxidharz-Härter sowie gegebenenfalls Alkylphenol und/oder Hydrophobierungsmittel und

2) der Dichte des mit dem Verfahren erhaltenen Baukörpers, bestimmt in kg/m$^3$, größer oder gleich 25 kg/m$^3$ und bevorzugt größer oder gleich 30 kg/m$^3$ ist sowie besonders bevorzugt im Bereich von 33 kg/ m$^3$ bis 37 kg/ m$^3$ liegt, insbesondere bei etwa 35 kg/m$^3$,

und/oder

wobei der Anteil an Epoxidharz und Epoxidharz-Härter sowie gegebenenfalls Alkylphenol und/oder Hydrophobierungsmittel oder

der Anteil an Reaktiwerdünner und Epoxidharz-Härter sowie gegebenenfalls Alkylphenol und/oder Hydrophobierungsmittel oder

der Anteil an Epoxidharz, Reaktivverdünner und Epoxidharz-Härter sowie gegebenenfalls Alkylphenol und/oder Hydrophobierungsmittel und die Dichte des mit dem Verfahren erhaltenen Baukörpers und die Gesamtoberfläche an porösem partikulären anorganischen Füllstoffmaterial derart gewählt oder eingestellt werden, dass das Produkt aus 1) dem Anteil an Epoxidharz und Epoxidharz-Härter sowie gegebenenfalls Alkylphenol und/oder Hydrophobierungsmittel oder

dem Anteil an Reaktivverdünner und Epoxidharz-Härter sowie gegebenenfalls Alkylphenol und/oder Hydrophobierungsmittel oder

dem Anteil an Epoxidharz, Reaktivverdünner und Epoxidharz-Härter sowie gegebenenfalls Alkylphenol und/oder Hydrophobierungsmittel,

2) der Dichte des mit dem Verfahren erhaltenen Baukörpers, bestimmt in kg/m$^3$, und

3) der Gesamtoberfläche des gemäß Schritt c) zur Verfügung gestellten porösen partikulären anorganischen Füllstoffmaterials, bestimmt in m$^2$/kg, größer oder gleich 300/m und bevorzugt größer oder gleich 400/m ist und besonders bevorzugt im Bereich von 450/m bis 550/m, insbesondere bei etwa 500/m, liegt.

**2.** Verfahren nach Anspruch 1, **dadurch gekennzeichnet, dass**
das poröse partikuläre anorganische Füllstoffmaterial Blähton, Blähschiefer, z.B. expandiertes Glimmerschiefergranulat, Hohlglaskugeln, Hohlkeramikkugeln, Mineralblähglas, z.B. geschäumtes Blähglas und/oder Blähglasgranulate, Blähperlite, Blähglimmer, insbesondere geblähtes oder geschäumtes Vermiculit, Lavaschlacke, Tuff oder Bims oder deren beliebige Mischungen umfasst.

**3.** Verfahren nach Anspruch 1 oder 2, **dadurch gekennzeichnet, dass**
der Reaktivverdünner mindestens einen di- oder trifunktionellen Glycidylether auf Basis eines aliphatischen oder aromatischen Alkohols, insbesondere aliphatischen Alkohols, umfasst.

**4.** Verfahren nach einem der vorangehenden Ansprüche, **dadurch gekennzeichnet, dass**
das poröse partikuläre anorganische Füllstoffmaterial eine mittlere Teilchengröße im Bereich von 0,3 mm bis 1,5 mm, besonders bevorzugt im Bereich von 0,5 mm bis 1,0 mm, oder eine mittlere Teilchengröße im Bereich von 0,5 mm bis 3,0 mm, besonders bevorzugt im Bereich von 1,0 mm bis 2,0 mm, oder eine mittlere Teilchengröße im Bereich von 1,5 mm bis 5,0 mm, besonders bevorzugt im Bereich von 2,0 mm bis 4,0 mm, aufweist.

**5.** Verfahren nach einem der vorangehenden Ansprüche, **dadurch gekennzeichnet, dass**
das poröse partikuläre anorganische Füllstoffmaterial ausgewählt ist aus einer Korngruppe mit einer Kornobergrenze und einer Kornuntergrenze, wobei sich die Kornobergrenze von der Kornuntergrenze maximal um den Faktor 4, besonders bevorzugt maximal um den Faktor 3 und insbesondere maximal um den Faktor 2 unterscheidet, beispielsweise ausgewählt ist aus einer der Korngruppen 0,1 bis 0,3 mm, 0,25 bis 0,5 mm, 0,5 bis 1,0 mm, 1,0 bis 2,0 mm, 2,0 bis 4,0 mm, 4,0 bis 8,0 mm oder 8,0 bis 16,0 mm oder aus beliebigen Mischungen dieser Komgruppenmaterialien, wobei bevorzugt maximal 15 Gew.-%, besonders bevorzugt maximal 10 Gew.-% und insbesondere maximal 5 Gew.-%, des partikulären Füllstoffmaterials mit einer Teilchengröße oberhalb der oberen Korngrenze und/oder wobei bevorzugt maximal 20 Gew.-%, besonders bevorzugt maximal 15 Gew.-% und insbesondere maximal 10 Gew.-%, des partikulären Füllstoffmaterials mit einer Teilchengröße unterhalb der unteren Korngrenze vorliegen.

6. Verfahren nach einem der vorangehenden Ansprüche, **dadurch gekennzeichnet, dass** der Pressdruck größer 1,0 N/mm$^2$, bevorzugt größer oder gleich 1,5 N/mm$^2$ und besonders bevorzugt größer 2,0 N/mm$^2$, ist.

7. Verfahren nach einem der vorangehenden Ansprüche, **dadurch gekennzeichnet, dass** die in dem Formbehältnis vorliegende Mischung, insbesondere während der Beaufschlagung mit dem Pressdruck, Temperaturen im Bereich von 60 bis 160° C, insbesondere im Bereich von 80 bis 140° C, aufweist.

8. Verfahren nach einem der vorangehenden Ansprüche, **dadurch gekennzeichnet, dass** der Schritt f) unterteilt ist in

    f1) Vermischen von Epoxidharz mit Epoxidharz-Härter und gegebenenfalls Alkylphenol und/oder Hydrophobierungsmittel oder
    Vermischen des mindestens einen Reaktivverdünners mit dem Epoxidharz-Härter und gegebenenfalls Alkylphenol und/oder Hydrophobierungsmittel oder
    Vermischen von Epoxidharz und Reaktivverdünner mit Epoxidharz-Härter und gegebenenfalls Alkylphenol und/oder Hydrophobierungsmittel und
    f2) Vermischen der in Schritt fl) erhaltenen Mischung mit dem porösen partikulären anorganischen Füllstoffmaterial in der Weise, dass das Epoxidharz und/oder der Reaktivverdünner nicht oder nicht vollständig ausgehärtet wird.

9. Verfahren nach einem der vorangehenden Ansprüche, **dadurch gekennzeichnet, dass** das Epoxidharz oder die gemäß Schritt fl) erhaltene Mischung vor und/oder bei der Mischung mit dem porösen partikulären anorganischen Füllstoffmaterial über eine Viskosität (bestimmt bei 25°C) nicht oberhalb von 550 mPas, bevorzugt nicht oberhalb von 400 mPas und besonders bevorzugt nicht oberhalb von 200 mPas verfügt.

10. Verfahren nach einem der vorangehenden Ansprüche, **dadurch gekennzeichnet, dass** das Epoxidharz im ausgehärteten Zustand über eine Glasübergangstemperatur von mindestens 60°C, bevorzugt von mindestens 70°C, besonders bevorzugt von mindestens 80 °C, verfügt.

11. Verfahren nach einem der vorangehenden Ansprüche, **dadurch gekennzeichnet, dass** der Gewichtsanteil an Epoxidharz und/oder Reaktivverdünner und gegebenenfalls Epoxidharz-Härter, bezogen auf das Gesamtgewicht an dem porösen partikulären anorganischen Füllstoffmaterial und dem Epoxidharz und/oder Reaktivverdünner sowie gegebenenfalls dem Epoxidharz-Härter, unterhalb von 12 %, bevorzugt bei 8,0 % oder darunter und besonders bevorzugt bei 7,0 % oder darunter liegt.

12. Verfahren nach einem der vorangehenden Ansprüche, ferner umfassend den Schritt:

    g) Behandeln des Formbehältnisses, insbesondere derjenigen Wandungen des Formbehältnisses, die in Kontakt mit der Mischung gemäß Schritt f) geraten, mit mindestens einem Trennmittel, insbesondere einem Wachs, und/oder
    h) Einlegen einer ersten Lage in das Formbehältnis, bevor die Mischung gemäß Schritt f) in das Formbehältnis gemäß Schritt i) gegeben wird und/oder
    j) Auflegen mindestens einer zweiten Lage auf die in das Formbehältnis gegebene Mischung, bevor die Beaufschlagung mit Druck gemäß Schritt k) erfolgt.

13. Verfahren nach einem der vorangehenden Ansprüche, **dadurch gekennzeichnet, dass** der Baukörper ein Bauprofil oder eine Bauplatte, insbesondere eine Putzträger- oder Sockelschutzplatte, darstellt.

14. Baukörper, insbesondere Bauprofil oder Bauplatte, z.B. Putzträger- oder Sockelschutzplatte, erhältlich nach dem Verfahren gemäß einem der vorangehenden Ansprüche.

15. Baukörper, insbesondere Bauprofil oder Bauplatte, z.B. Putzträger- oder Sockelschutzplatte, umfassend oder bestehend aus
    mittels Epoxidharz-Härter ausgehärtetem Epoxidharz als Bindemittelmatrix oder mittels Epoxidharz-Härter ausgehärtetem Reaktivverdünner als Bindemittelmatrix oder
    mittels Epoxidharz-Härter ausgehärtetem Epoxidharz und Reaktiverdünner als Bindemittelmatrix
    und darin eingebettet einer Vielzahl an Bruchstücken eines porösen partikulären anorganischen Füllstoffmaterials sowie gegebenenfalls mindestens einem Hydrophobierungsmittel und/oder Alkylphenol und/oder aus porösem partikulären anorganischen Füllstoffmaterial.

16. Baukörper nach Anspruch 14 oder 15, **dadurch gekennzeichnet, dass** dieser enthält oder besteht aus

A1) ausgehärtetem Epoxidharz als Bindemittelmatrix, gebildet in Gegenwart von Epoxidharz und Epoxidharz-Härtern sowie gegebenenfalls von Alkylphenolen und/oder mindestens einem Hydrophobierungsmittel, oder

A2) ausgehärtetem Reaktivverdünner als Bindemittelmatrix, gebildet in Gegenwart von Reaktivverdünner und Epoxidharz-Härtern sowie gegebenenfalls von Alkylphenolen und/oder mindestens einem Hydrophobierungsmittel, oder

A3) der ausgehärteten Mischung aus Epoxidharz und Reaktivverdünner als Bindemittelmatrix, gebildet in Gegenwart von Epoxidharz, Reaktivverdünner und Epoxidharz-Härtern sowie gegebenenfalls von Alkylphenolen und/oder mindestens einem Hydrophobierungsmittel,

und

B) porösem partikulären anorganischen Füllstoffmaterial.

17. Baukörper nach einem der Ansprüche 16 bis 18, **dadurch gekennzeichnet, dass** die porösen partikulären anorganischen Füllstoffmaterialen zumindest in Teilen zerstört in Form von Bruchstücken in der Bindemittelmatrix vorliegen und dass das ausgehärtete Epoxidharz die beim Pressen entstandenen Bruchstücke der, insbesondere sphärischen, Füllstoffmaterialien einbindet, insbesondere miteinander verklebt.

18. Baukörper, insbesondere Bauplatte, nach einem der Ansprüche 14 bis 17, **gekennzeichnet durch** eine maximale Biegezugfestigkeit $F_{max}$, bestimmt gemäß DIN EN 1015 - Teil 11, Ausgabe 2007, von 1,5 N/mm$^2$ oder darüber und bevorzugt von 2,0 N/mm$^2$ oder darüber sowie besonders bevorzugt im Bereich von 2,3 N/mm$^2$ bis 2,8 N/mm$^2$, insbesondere von etwa 2,5 N/mm$^2$,

19. Baukörper, insbesondere Bauplatte, nach einem der Ansprüche 14 bis 18, **gekennzeichnet durch** eine erste Lage, insbesondere auf oder in einer ersten Seite der Bauplatte vorliegend, und/oder eine zweite Lage, insbesondere auf oder in einer der ersten Seite gegenüberliegenden zweiten Seite der Bauplatte vorliegend, wobei die erste und/oder zweite Lage vorzugsweise eine gewirkte, gewebte oder gestrickte Lage oder eine Vlieslage, insbesondere ein Armierungsgewebe, darstellt.

20. Baukörper nach einem der Ansprüche 14 bis 19, **gekennzeichnet durch** einen Brennwert kleiner oder gleich 3 MJ/kg (bestimmt nach DIN EN ISO 1716:2010-11).

**Europäisches Patentamt**
**European Patent Office**
**Office européen des brevets**

## EUROPÄISCHER RECHERCHENBERICHT

Nummer der Anmeldung

EP 19 15 9859

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 0 290 881 A2 (STO AG [DE]) 17. November 1988 (1988-11-17) * Ausführungsbeispiele; Seite 4; Ansprüche 1-9 * ----- | 1-20 | INV. C04B26/14 C04B14/02 C04B14/10 C04B14/12 |
| A,D | DE 10 2008 011627 A1 (STO AG [DE]) 17. September 2009 (2009-09-17) * Absatz [0007]; Ansprüche 1-13 * ----- | 1-20 | C04B14/14 C04B14/16 C04B14/18 C04B14/20 |
| A | DE 101 07 145 A1 (STO AG [DE]) 19. September 2002 (2002-09-19) * Ansprüche 1-12 * ----- | 1-20 | C04B14/22 C04B14/24 C04B40/02 |
| A,D | DE 10 2010 023708 A1 (FENSTERLE BAUUNTERNEHMEN GMBH [DE]; FIBO EXCLAY DEUTSCHLAND GMBH [DE]) 15. Dezember 2011 (2011-12-15) * Ansprüche 1-21 * ----- | 1-20 | |
| A | EP 2 826 798 A1 (HILTI AG [LI]) 21. Januar 2015 (2015-01-21) * Absatz [0043] - Absatz [0045] * * Absatz [0049] - Absatz [0062] * ----- | 1-20 | |

RECHERCHIERTE SACHGEBIETE (IPC)

C04B

Der vorliegende Recherchenbericht wurde für alle Patentansprüche erstellt

| Recherchenort | Abschlußdatum der Recherche | Prüfer |
|---|---|---|
| Den Haag | 3. Juni 2019 | Süzük, Kerem Güney |

## ANHANG ZUM EUROPÄISCHEN RECHERCHENBERICHT
## ÜBER DIE EUROPÄISCHE PATENTANMELDUNG NR.

EP 19 15 9859

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-06-2019

| Im Recherchenbericht angeführtes Patentdokument | Datum der Veröffentlichung | Mitglied(er) der Patentfamilie | Datum der Veröffentlichung |
|---|---|---|---|
| EP 0290881 A2 | 17-11-1988 | DE 3715487 A1<br>EP 0290881 A2<br>ES 2034000 T3<br>GR 3005207 T3<br>US 4919866 A | 17-11-1988<br>17-11-1988<br>01-04-1993<br>24-05-1993<br>24-04-1990 |
| DE 102008011627 A1 | 17-09-2009 | DE 102008011627 A1<br>EP 2257506 A1<br>WO 2009106310 A1 | 17-09-2009<br>08-12-2010<br>03-09-2009 |
| DE 10107145 A1 | 19-09-2002 | KEINE | |
| DE 102010023708 A1 | 15-12-2011 | DE 102010023708 A1<br>EP 2395164 A2 | 15-12-2011<br>14-12-2011 |
| EP 2826798 A1 | 21-01-2015 | AU 2014292018 A1<br>CA 2918362 A1<br>CN 105377937 A<br>EP 2826796 A1<br>EP 2826798 A1<br>EP 3022245 A1<br>EP 3489269 A1<br>ES 2707328 T3<br>ES 2708751 T3<br>HK 1215716 A1<br>JP 2016532742 A<br>RU 2016105299 A<br>SG 11201600309R A<br>US 2016159690 A1<br>WO 2015007879 A1 | 11-02-2016<br>22-01-2015<br>02-03-2016<br>21-01-2015<br>21-01-2015<br>25-05-2016<br>29-05-2019<br>03-04-2019<br>11-04-2019<br>09-09-2016<br>20-10-2016<br>23-08-2017<br>26-02-2016<br>09-06-2016<br>22-01-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 290881 A2
- DE 102008011627 A1
- DE 102010023708 A1
- DE 102008063815 A1
- DE 102006056136 A1
- DE 202006000751
- DE 3715487